# FASCICULE DE BREVET EUROPEEN

(11) **EP 3 482 502 B1**
(45) Date de publication et mention de la délivrance du brevet: **02.09.2020**
(21) Numéro de dépôt: 17745839.5
(22) Date de dépôt: 06.07.2017
(51) Int. Cl.: H04L 5/00, H04B 3/54, H04B 1/707, H04L 27/26

(54) **PROCÉDÉ ET SYSTÈME DE COMMUNICATION POUR DES MODULES INTERCONNECTÉS PAR COURANTS PORTEURS EN LIGNE**
VERFAHREN UND KOMMUNIKATIONSSYSTEM FÜR ÜBER EIN NIEDERSPANNUNGSNETZ VERBUNDENE MODULE
METHOD AND COMMUNICATION SYSTEM FOR MODULES INTERCONNECTED BY POWER LINE COMMUNICATION

(30) Priorité: 07.07.2016 FR 1656550
(43) Date de publication de la demande: 15.05.2019
(73) Titulaire: Safran Electrical & Power, 31702 Blagnac Cedex (FR)
(72) Inventeur: TREBOSC, Marc Christophe, 31702 BLAGNAC CEDEX (FR); LEBOUTEILLER, Thomas, 77550 MOISSY-CRAMAYEL CEDEX (FR)
(74) Mandataire: Cabinet Beau de Loménie
(86) Numéro de dépôt international: PCT/FR2017/051839
(87) Numéro de publication internationale: WO 2018/007757

(56) Documents cités:
- WO-A1-2007/031568
- CN-U- 203 135 872
- JP-A- 2001 007 757

## Description

### Arrière-plan de l'invention

L'invention concerne le domaine des courants porteurs en ligne. Plus précisément, l'invention concerne un procédé, et un système de communication entre des modules de communication interconnectés sur un réseau électrique par une liaison filaire à l'aide de courants porteurs en ligne. Le procédé et le système de communication proposés peuvent, notamment, être mis en oeuvre pour des systèmes embarqués aéronautiques.

La technique de transmission de données numériques par courants porteurs en ligne, technique dite CPL ou PLC (« Power Line Communication ») a pour objet d'échanger des données numériques entre plusieurs modules de communication via un réseau filaire constitué par les lignes préexistantes d'alimentation secteur, typiquement 230 V - 50 Hz en Europe. Pour ce faire, les informations d'un module à un autre sont échangées par modulation d'une ou plusieurs porteuses dans une bande de fréquences généralement située dans la plage 2-30 MHz, tel que dans le document EP2403151.

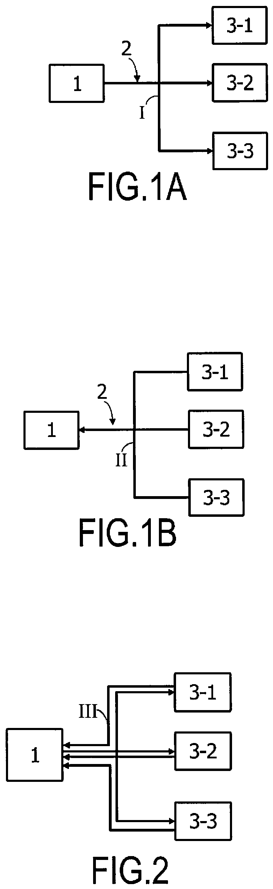

Une architecture couramment implémentée pour la transmission de données numériques par courants porteurs en ligne entre différents modules de communication, par exemple entre des modems, repose sur une méthode de communication bidirectionnelle semi-duplex («half-duplex »). Un exemple de cette architecture, représenté sur les figures la et 1b, comprend un module de communication maitre 1 interconnecté par l'intermédiaire d'un canal physique, à savoir une liaison filaire 2, avec un ou plusieurs modules de communication esclaves 3-1, 3-2, 3-3. L'accès au canal physique par les différents modules de communication est réalisé selon une méthode d'accès multiple à répartition dans le temps TDMA (« Time Division Multiple Access »). La communication entre le module de communication maître 1 et les modules esclaves 3-1, 3-2, 3-3 est alors réalisée en plusieurs étapes. A titre d'exemple, le maitre 1 envoie d'abord une requête (flèches I sur la figure 1a) à un ou plusieurs esclaves 3-1, 3-2, 3-3, puis ces derniers répondent (flèches II sur la figure 1b) alors les uns après les autres. Chaque module de communication esclave 3-1, 3-2, 3-3 a donc un temps d'émission alloué.

Cependant, pour une telle architecture, le fait d'augmenter le nombre de modules de communication esclaves 3-1, 3-2, 3-3 implique de diminuer le temps de communication alloué à chacun d'eux. Par ailleurs, pour une architecture de communication fixée, notamment en termes de spécifications relatives à ses différentes couches protocolaires et à sa couche physique, l'augmentation du nombre de modules de communication esclaves 3-1, 3-2, 3-3 impose d'augmenter le débit des communications. Ainsi, les contraintes de répartition des temps de communication alloués à chaque module de communication esclave 3-1, 3-2, 3-3 peuvent s'avérer sévères. L'augmentation du nombre de modules de communication esclaves 3-1, 3-2, 3-3 complexifie donc la réalisation de cette architecture et limite fortement sa viabilité.

Il est donc souhaitable de relâcher les contraintes imposées par les couches applicatives sur l'architecture de la couche physique mettant en œuvre une transmission de données numériques par courants porteurs en ligne.

Une solution pour parer aux limites précitées consisterai en la mise en œuvre d'une méthode de communication bidirectionnelle duplex intégrale (« full-duplex »), à l'image de la figure 2, qui autoriserait alors plusieurs modules de communication, maître 1 ou esclaves 3-1, 3-2, 3-3, à émettre simultanément (flèches III) sur le même canal physique, à savoir la liaison filaire 2 pour la transmission de courants porteurs en ligne.

Cependant, une telle solution doit respecter un certain nombre de contraintes, notamment :
- la transmission des données par courants porteurs en ligne entre les différents modules de communication doit proposer des débits importants, à savoir de l'ordre de plusieurs Mégabits par seconde ;
- l'architecture proposée doit être à même de compenser les variations du canal physique, tels les multi-trajets, les interférences, la fonction de transfert du canal, ou encore le bruit bande étroite (ex : perturbations fréquentielles rencontrées dans les câbles de puissance d'un avion) ;
- elle doit présenter une modularité et une faible complexité. Notamment, la solution proposée doit permettre l'ajout et/ou le remplacement de tout module de communication de type CPL, sans impacter les performances de l'architecture ;
- pour la transmission de données par courants porteurs en ligne, et dans le cadre des systèmes embarqués aéronautiques, respecter les gabarits d'émission imposés par la norme DO160.

Plusieurs solutions pourraient être envisagées pour la mise en œuvre d'une architecture bidirectionnelle duplex intégrale mettant en œuvre une transmission par courants porteurs en ligne.

Une première solution serait de considérer une méthode d'accès multiple par répartition en fréquence FDMA (« Frequency Division Multiple Access ») pour accéder au canal physique, combinée avec une modulation simple (ex : BPSK, QPSK) pour obtenir des débits élevés.

Cependant, une telle solution engendre des problèmes de synchronisation fréquentielle entre les modules de communication liés aux fréquences porteuses. Par ailleurs, une telle solution s'avère limitée pour compenser les variations du canal physique.

La mise en œuvre d'une modulation par répartition en fréquences orthogonales dite OFDM (« Orthogonal Frequency Division Multiplexing ») avec partage des porteuses entre les différents modules de communication permettrait de palier aux inconvénients de la solution précédente. En effet, pour une telle solution, les problématiques de synchronisation fréquentielles de porteuses sont inexistantes, cette modulation étant réalisée en bande de base. Par ailleurs, une telle solution permettrait de compenser les défauts du canal physique en égalisant les sous-porteuses et en désactivant les sous-porteuses pour lesquelles la transmission s'opère mal.

Cependant, pour cette solution, l'accès aux ressources fréquentielles sera limité avec l'augmentation progressive du nombre de modules de communication. Le débit se verra donc décroître. Par ailleurs, une telle solution implique des limitations fortes sur les techniques de synchronisation temporelle entre les modules de communication, cette synchronisation étant actuellement figée dans le domaine temps/fréquence.

Une troisième solution consisterait à combiner la méthode d'accès FDMA avec la modulation OFDM. Chaque module de communication utiliserait alors une modulation OFDM, tout en ne communiquant que sur certaines bandes de fréquences/porteuses pré-attribuées.

Une telle solution s'avère cependant peu modulaire et manque de flexibilité : le remplacement ou l'insertion d'un module de communication dans l'architecture nécessitera une gestion dynamique contraignante de celui-ci, par exemple la monopolisation d'une bande de fréquence prédéterminée. Une telle solution impose, par ailleurs, encore une fois des limitations fortes sur les techniques de synchronisation temporelle utilisables entre les différents modules de communication.

WO2007/031568 A1 divulgue un procédé et un dispositif de transmission d'un signal à porteuses multiples et à étalement de spectre de l'art antérieur.

En l'état, aucune des solutions précitées ne s'avère pertinente pour permettre la mise en œuvre d'une communication bidirectionnelle duplex intégrale entre des modules de communication interconnectés par une liaison filaire et échangeant des données par courants porteurs en ligne, tout en respectant les contraintes précédemment évoquées.

### Obiet et résumé de l'invention

La présente invention a pour but de remédier aux inconvénients précités. Plus précisément, la présente invention a pour but de proposer, dans le contexte d'une communication bidirectionnelle duplex intégrale faisant appel à une technique de transmission de données par courants porteurs en ligne, une solution présentant des débits élevés (de l'ordre de plusieurs Mb/s), résistante aux variations du canal physique, modulaire et flexible.

A cet effet, l'invention a pour objet un procédé de communication entre des modules de communication interconnectés sur un réseau électrique par une liaison filaire à l'aide de courants porteurs en ligne CPL véhiculés sur la liaison filaire, le procédé comprenant :
- avant une émission d'un signal de données par un module de communication, une étape de modulation fréquentielle du signal de données à émettre, et,
- suite à ou durant l'étape de modulation du signal de données, une étape d'étalement de spectre par séquence directe du signal de données à émettre, et,
- après une réception d'un signal de données par un module de communication, une étape de démodulation fréquentielle du signal de données reçu et une étape de désétalement de spectre par séquence directe du signal de données reçu.

Avantageusement, l'association d'une technique d'étalement de spectre par séquence directe dite DSSS avec une modulation fréquentielle permet la transmission simultanée de plusieurs signaux de données émis par des modules de communication distincts sur une même liaison filaire à l'aide de courants porteurs en ligne. Il est ainsi possible, notamment, de réduire le niveau de puissance de chaque signal de données émis, et de rapprocher ce niveau d'un seuil proche du bruit. L'utilisation d'une technique d'étalement de spectre par séquence directe DSSS permet en outre de différencier les signaux de données des différents modules de communication dans le cadre d'une communication bidirectionnelle duplex intégrale (« full-duplex »).

Cette solution permet, par ailleurs, de renforcer la confidentialité des données échangées entre chaque module de communication. En effet, un signal de données réceptionné ne peut être désétalé puis identifié par un module de communication récepteur du signal de donnée que si ce module dispose d'une séquence de désétalement appropriée. L'étalement de spectre permet, par ailleurs, de conférer au signal de données transmis une immunité face aux risques de perturbations bande étroite existant sur la liaison filaire, telles des perturbations radiofréquences rayonnées.

Selon un aspect du procédé de communication, les étapes de modulation et de démodulation sont respectivement réalisées par une modulation et une démodulation par multiplexage fréquentiel orthogonal dite OFDM.

Avantageusement, l'utilisation d'une modulation par multiplexage fréquentiel orthogonal OFDM associée à une technique d'étalement de spectre DSSS, permet de fournir des débits de transmission de données élevés (de l'ordre de plusieurs Mégabits par seconde) et fixes, pour des transmissions multi-modules simultanées.

Selon un autre aspect du procédé de communication, l'étape de désétalement de spectre par séquence directe DSSS du signal de données
est réalisée avant ou durant l'étape de démodulation du signal de données.

Selon un autre aspect, le procédé de communication comprend en outre :
- lors d'une première connexion d'un premier module de communication à la liaison filaire à laquelle est connecté un deuxième module de communication destiné à communiquer avec ledit premier module de communication, une étape de transmission d'une clé de connexion par ledit premier module au deuxième module de communication ;
- après réception par le deuxième module de communication de ladite clé de connexion, une étape de transmission d'une clé de communication par ledit deuxième module de communication audit premier module de communication ;
- l'utilisation de la clé de communication par le premier module de communication et le deuxième module de communication au cours des étapes d'étalement et de désétalement de spectre par séquence directe DSSS du signal de données.

L'invention a également pour objet un système de communication comprenant une pluralité de modules de communication interconnectés sur un réseau électrique par une liaison filaire à l'aide de courants porteurs en ligne CPL véhiculés sur la liaison filaire, chaque module de communication comprenant des moyens de modulation configurés pour moduler fréquentiellement un signal de données à émettre avant son émission, et des moyens de démodulation configurés pour démoduler fréquentiellement un signal de données après sa réception, chaque module de communication comprenant en outre des moyens d'étalement configurés pour réaliser un étalement de spectre par séquence directe du signal de données à émettre après ou durant la modulation du signal de données par les moyens de modulation, et des moyens de désétalement configurés pour réaliser un désétalement de spectre par séquence directe du signal de données reçu.

Selon un aspect du système de communication, les moyens de modulation et de démodulation sont respectivement configurés pour réaliser une modulation et une démodulation par multiplexage fréquentiel orthogonal.

Selon un autre aspect du système de communication, les moyens de désétalement sont configurés pour réaliser le désétalement de spectre par séquence directe DSSS du signal de données avant ou durant la démodulation du signal de données par les moyens de démodulation.

Selon un autre aspect, le système de communication comprend un premier module de communication et un deuxième module de communication destiné à communiquer avec ledit premier module de communication, le premier module de communication étant configuré pour transmettre, lors d'une première connexion à la liaison filaire, une clé de connexion audit deuxième module de communication, ledit deuxième module de communication ayant reçu ladite clé de connexion étant configuré pour transmettre une clé de communication audit premier module de communication, les moyens d'étalement et de désétalement desdits premier module de communication et deuxième module de communication étant configurés, en outre, pour utiliser la clé de communication pour réaliser l'étalement et le désétalement de spectre par séquence directe DSSS du signal de données.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures la et 1b, déjà décrites, illustrent une architecture pour la transmission de données numériques par courants porteurs en ligne entre différents modules de communication, selon une méthode de communication bidirectionnelle semi-duplex réalisée dans l'état de l'art ;
- la figure 2, déjà décrite, illustre de manière simplifiée une architecture pour la transmission de données numériques par courants porteurs en ligne entre différents modules de communication, selon une méthode de communication bidirectionnelle intégral ;
- la figure 3 illustre schématiquement une chaîne de transmission d'un signal de données depuis un premier module de communication vers un deuxième module de communication selon un mode de réalisation de l'invention ;
- la figure 4 présente un logigramme d'un procédé de communication entre le premier module de communication et le deuxième module de communication de la figure 3 selon un mode de mise en œuvre de l'invention ;
- la figure 5 présente un logigramme d'un procédé de communication mis en œuvre lors de la première connexion d'un module de communication selon un mode de réalisation de l'invention.

### Description détaillée de modes de réalisation

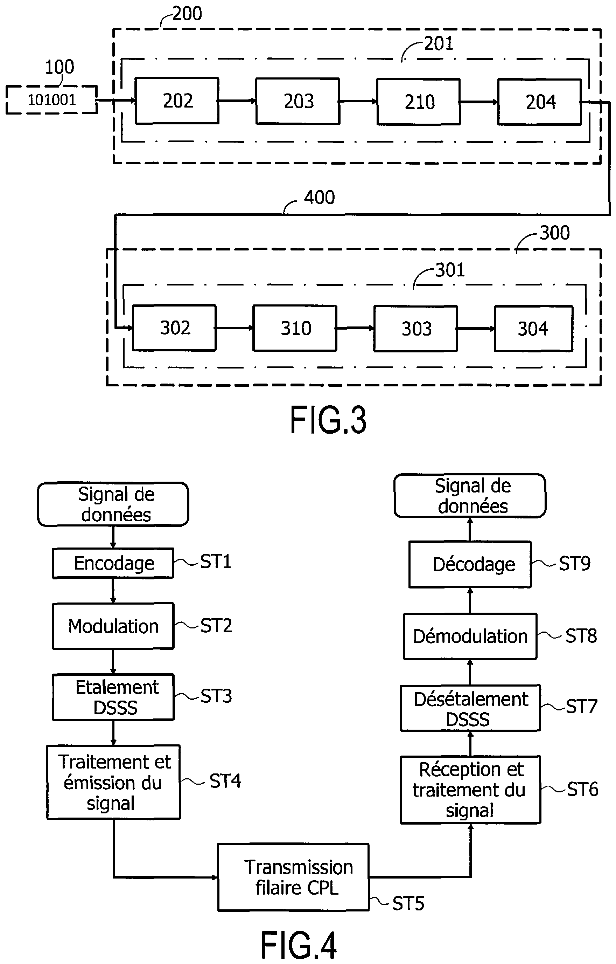

La figure 3 illustre de manière simplifiée une chaine de transmission d'un signal de données 100 depuis un premier module de communication 200 vers un deuxième module de communication 300 interconnectés sur un réseau électrique par une liaison filaire 400.

Le signal de données 100 est acheminé du premier module 200 vers le deuxième module 300 à l'aide de courants porteurs en ligne CPL véhiculés sur la liaison filaire 400.

A titre d'exemple, les modules de communication 200, 300 représentés peuvent indifféremment être un module esclave et un module maître, ou deux modules esclaves. En outre, d'une manière générale, il est possible d'interconnecter via la liaison filaire 400 un nombre quelconque de modules de communication.

Le premier module de communication 200 comprend une chaine d'émission 201 qui comporte classiquement des moyens d'encodage 202, des moyens de modulation 203, et des moyens d'émission 204.

Les moyens d'encodage 202 du signal de données 100, sont configurés ici à titre d'exemple pour recevoir le signal de données 100 et pour associer un code correcteur d'erreur au signal de données, en vue de limiter d'éventuelles erreurs de transmission de données sur la liaison filaire 400.

Les moyens de modulation 203 sont couplés en sortie des moyens d'encodage 202 et sont configurés pour moduler fréquentiellement le signal de données encodé par les moyens d'encodage 202.

Les moyens d'émissions 204, sont configurés pour mettre en forme et envoyer le signal de données modulé fréquentiellement par les moyens de modulation 203 sur la liaison filaire 400, à destination du deuxième module de communication 300. Les moyens d'émission 204 sont, par exemple, réalisés par un circuit de type « front-end » comprenant successivement un convertisseur numérique-analogique et un coupleur pour transmettre le signal sur la liaison filaire 400.

Conformément à l'invention, la chaine d'émission 201 du premier module de communication 200 comprend en outre des moyens d'étalement 210 raccordés entre les moyens de modulation 203 et les moyens d'émission 204. Les moyens d'étalement 210 sont configurés pour réaliser un étalement de spectre par séquence directe du signal de données modulé fréquentiellement. Cette technique d'étalement est couramment connue sous le nom de DSSS pour « Direct-Sequence Spread Spectrum ».

L'étalement de spectre par séquence directe DSSS est réalisé en effectuant un produit tensoriel de Kronecker entre le signal numérique de données modulé et une séquence pseudo-aléatoire utilisée en tant que séquence d'étalement.

Avantageusement, la séquence pseudo-aléatoire utilisée pour l'émission du signal est choisie de sorte à présenter une faible inter-corrélation entre deux séquences différentes et une forte inter-corrélation pour une même séquence, c'est-à-dire une forte autocorrélation.

L'étalement de spectre par séquence directe DSSS est préférentiellement appliqué à un signal de données modulé à partir d'une modulation fréquentielle multi-porteuse.

Dans le mode de réalisation illustré sur la figure 3, la modulation est une modulation par multiplexage fréquentiel orthogonal, couramment connue sous le nom de modulation OFDM pour « Orthogonal Frequency-Division Multiplexing ».

L'association d'une modulation OFDM à l'étalement de spectre par séquence directe DSSS est particulièrement avantageuse car la modulation OFDM permet de fournir des débits de communication importants (de l'ordre de plusieurs Mégabits par seconde), tandis que l'étalement de spectre permet d'émettre chaque signal de données à un niveau de puissance réduit, proche du bruit. Le signal étalé présente alors une meilleure immunité face aux bruits bande étroite et aux perturbations, dues notamment aux multi-trajets, pouvant survenir sur la liaison filaire 400. L'étalement de spectre permet, par ailleurs, d'émettre simultanément sur la liaison filaire 400 plusieurs signaux de données, étalés à partir de séquences pseudo-aléatoires distinctes, sans que ces derniers n'interfèrent entre eux. L'étalement de spectre par séquence directe DSSS permet ainsi de dissocier les signaux de données des différents modules de communication dans le cadre d'une communication bidirectionnelle duplex intégrale (« full-duplex »).

Dans le mode de réalisation illustré sur la figure 3, les moyens d'étalement 210 sont disposés après les moyens de modulation 203. L'étalement de spectre est donc réalisé après la modulation fréquentielle du signal de données 100.

Dans un autre mode de réalisation non-illustré, il est possible de combiner les moyens d'étalement 210 avec les moyens de modulation 203. L'étalement de spectre est alors réalisé durant la modulation fréquentielle du signal de données 100. A titre d'exemple, si les moyens de modulation 203 implémentent une modulation par multiplexage fréquentiel orthogonal OFDM, l'étalement de spectre peut être réalisé juste après la transformée de Fourier inverse couramment implémentée lors de la réalisation de la modulation OFDM.

Avantageusement, l'étalement de spectre par séquence directe DSSS des signaux de données après ou durant la modulation fréquentielle permet de réaliser une communication bidirectionnelle duplex intégrale (« full-duplex ») entre les différents modules de communication. A l'inverse, une étape d'étalement de spectre des signaux de données avant l'étape de modulation ne permettrait pas une communication « full-duplex ». En effet, une modulation de différents signaux de données sur une même bande de fréquence et une même période temporelle conduirait à mélanger les signaux de données des différents modules de communication. Il est en effet nécessaire d'associer une clé à chaque signal de donnée, c'est-à-dire un code obtenu par sur-échantillonnage de chaque signal, en vue de dissocier les signaux de données des différents modules de communication. Une fois chaque clé attribuée, une étape de modulation aurait alors pour conséquence une perte du sur-échantillonnage et donc une perte des clés permettant de différencier les signaux de données des différents modules de communication.

Le deuxième module de communication 300 comprend une chaine de réception 301 qui comporte classiquement des moyens de réception 302, des moyens de démodulation 303, et des moyens de décodage 304.

Les moyens de réception 302 sont connectés en entrée à la liaison filaire 400 et sont configurés pour réceptionner le signal de données délivré par le premier module de communication 200 et véhiculé sur liaison filaire 400. Ces moyens de réception 302 sont, par exemple, réalisés par un circuit de type « front-end » comprenant successivement un coupleur pour réceptionner le signal depuis la liaison filaire 400, un amplificateur de gain et un convertisseur analogique-numérique pour numériser le signal de données réceptionné.

Les moyens de démodulation 303 sont raccordés en sortie des moyens de réception 302. Ils sont configurés pour démoduler fréquentiellement le signal de données numérisé réceptionné par les moyens de réception 302.

Les moyens de décodage 304 du signal de données sont configurés ici à titre d'exemple pour appliquer le code correcteur d'erreur au signal de données démodulé par les moyens de démodulation 303, de sorte à obtenir le signal de données 100.

Conformément à l'invention, afin de pouvoir désétaler le signal à la réception, la chaine de réception 301 du deuxième module de communication 300 comprend des moyens de désétalement 310 configurés pour réaliser un désétalement de spectre par séquence directe DSSS du signal de données réceptionné.

Un signal de données étalé lors de son émission à partir d'une séquence binaire pseudo-aléatoire, et réceptionné par un module de communication, ne peut être désétalé que si ce module de communication connait la séquence binaire pseudo-aléatoire employée lors de l'émission. Le deuxième module de communication 300 connait donc la séquence pseudo-aléatoire employée par le premier module de communication 200.

Dans le mode de réalisation illustré, le désétalement est alors réalisé via l'application d'un produit scalaire entre le signal de données réceptionné et cette séquence binaire pseudo-aléatoire. La séquence pseudo-aléatoire est, à titre d'exemple, un code de Kasami.

Les moyens de désétalement 310 sont disposés avant les moyens de démodulation 303. Le désétalement de spectre est donc réalisé avant la démodulation fréquentielle du signal de données 100.

Dans un autre mode de réalisation non-illustré, il est possible de combiner les moyens de désétalement 310 avec les moyens de démodulation 303. Le désétalement de spectre est alors réalisé durant la démodulation fréquentielle du signal de données 100. A titre d'exemple, si les moyens de démodulation 303 implémentent une démodulation par multiplexage fréquentiel orthogonal OFDM, le désétalement de spectre peut être réalisé juste avant la transformée de Fourier couramment implémentée lors de la réalisation de la démodulation OFDM.

Pour simplifier la lecture de la figure 3, seule la chaine d'émission 201 du premier module de communication 200, et la chaine de réception 301 du deuxième module de communication sont représentées. Néanmoins, chacun des modules de communication 200, 300 peut être émetteur ou récepteur d'un signal de données 100. Les modules de communication 200, 300 comprennent donc tous une chaine d'émission et une chaine de réception, réalisées respectivement de manière similaire à la chaine d'émission 201 et à la chaine de réception 301.

Avantageusement, chaque module de communication 200, 300 dispose d'une séquence binaire pseudo-aléatoire qui lui est propre et qui est utilisée lors de l'étalement de spectre d'un signal de données 100 à émettre. Seul un module de communication distinct ayant connaissance de cette séquence binaire pseudo-aléatoire pourra donc désétaler un signal de données réceptionné et préalablement étalé avec cette même séquence par un module de communication émetteur.

Plusieurs signaux de données étalés spectralement par des modules de communication distincts à partir de séquences binaires pseudo-aléatoires peuvent donc être émis simultanément sur la liaison filaire 400. Chaque module de communication 200, 300 doit donc être capable d'identifier un signal de données qui lui est destiné.

Ainsi, dans un mode de réalisation, les moyens de désétalement 310 peuvent comprendre, ou être associés, à des moyens de synchronisation temporelle, pour détecter si un signal de données réceptionné à partir de la liaison filaire 400 est destiné ou non au module de communication récepteur de ce signal. A titre d'exemple, après numérisation d'un signal de données réceptionné, les moyens de synchronisation temporelle sont configurés pour détecter à l'aide d'une fenêtre glissante un préambule prédéterminé ou une séquence binaire pseudo-aléatoire prédéterminée.

La figure 4 illustre un mode de réalisation particulier d'un procédé de communication entre le premier module de communication 200 et le deuxième module de communication 300, se rapportant au mode de réalisation illustré sur la figure 3.

Pour un signal de données à transmettre, le premier module de communication 200 effectue les opérations suivantes :
- un encodage (étape ST1) du signal de données 100 à transmettre par le premier module de communication 200, à titre d'exemple, en associant un code correcteur d'erreur au signal de données ;
- une modulation du signal (étape ST2) encodé, préférentiellement à l'aide d'une modulation fréquentielle multi-porteuse, par exemple une modulation OFDM, pour garantir un débit élevé du signal transmis ;
- un étalement (étape ST3) de spectre par séquence directe DSSS du signal modulé, en effectuant un produit tensoriel entre le signal modulé et une séquence binaire pseudo-aléatoire (séquence d'étalement) prédéterminée ;
- un traitement et un envoi (étape ST4) du signal étalé sur la liaison filaire 400, le traitement et l'envoi du signal consistant, à titre d'exemple, en une conversion numérique vers analogique du signal, suivie de son couplage sur la liaison filaire 400.

Le signal de données émis est alors transporté (étape ST5) sur la liaison filaire 400 à l'aide de courants porteurs en ligne CPL vers le deuxième module de communication 300, qui effectue alors les opérations suivantes :
- une réception et un traitement (étape ST6) du signal véhiculé sur la liaison filaire 400, la réception et le traitement du signal consistant, à titre d'exemple, en un couplage du signal reçu via la liaison filaire 400, suivi d'une amplification en gain et d'une conversion analogique vers numérique du signal ;
- un désétalement (étape ST7) de spectre par séquence directe DSSS du signal modulé, en effectuant un produit scalaire entre le signal modulé et la séquence binaire pseudo-aléatoire (séquence d'étalement) prédéterminée utilisée par le premier module de communication 200 ; dans un mode de réalisation, cette étape peut être précédée ou combinée avec une étape de synchronisation temporelle, consistant à identifier le signal reçu, à l'aide par exemple d'une fenêtre glissante permettant de détecter un préambule prédéterminé ou une séquence binaire pseudo-aléatoire prédéterminée ;

- une démodulation (étape ST8) du signal désétalé, en accord avec la modulation utilisée lors de l'émission du signal de données, par exemple une démodulation OFDM du signal désétalé ;
- un décodage (étape ST9) du signal démodulé, par exemple via l'application d'un code correcteur d'erreur sur le signal démodulé, de manière à permettre d'obtenir en sortie le signal de données initial, sans erreur de transmission de données.

Comme exposé plus haut, le procédé de communication décrit ci-dessus se rapporte à un mode de réalisation particulier correspondant à la chaine de transmission illustrée sur la figure 3. D'une manière générale, conformément à l'invention, on veillera à implémenter au moins les étapes : de modulation/démodulation, préférentiellement mais pas nécessairement via une modulation/démodulation OFDM, ainsi que les étapes d'étalement/de désétalement de spectre par séquence directe DSSS. Ces étapes sont, en effet, essentielles pour fournir à la fois des débits élevés, et assurer la transmission simultanée de signaux de données par différents modules de communication, sans présenter de risque d'interférences entre les différents signaux ou d'erreurs de transmission lors du transport des signaux sur la liaison filaire 400 par courants porteurs en ligne CPL.

Par ailleurs, comme exposé au cours de la partie introductive, les modules de communication interconnectés par la liaison filaire 400 doivent présenter une architecture modulaire et flexible, facilitant le remplacement ou l'insertion de tout nouveau module de communication.

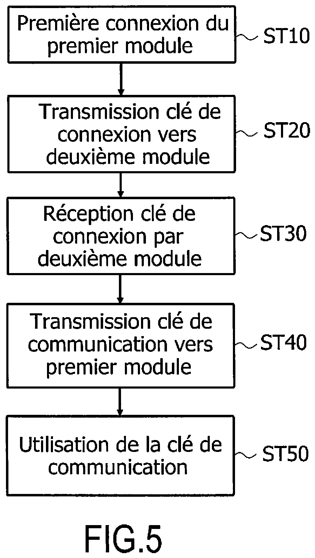

La figure 5 illustre, pour ce faire, les étapes d'un procédé de communication entre le premier module de communication 200 et le deuxième module de communication 300, dans la situation où le premier module de communication 200 est connecté pour la première fois à la liaison filaire 400, et pour laquelle le deuxième module de communication 300 est destiné à communiquer avec le premier module de communication 200.

Dans une première étape ST10, le premier module de communication 200 est connecté à la liaison filaire 400 pour la première fois.

Dans une étape suivante ST20, le premier module de communication 200 transmet alors au deuxième module de communication 300, via la liaison filaire 400, une clé de connexion, cette clé de connexion étant préalablement associée au premier module de communication 200 en vue de permettre son identification. La clé de connexion peut, par exemple, être transmise au deuxième module de communication 300 par l'intermédiaire d'une trame binaire de données modulée et étalée avec la clé de connexion.

Le deuxième module de communication 300 réceptionne ensuite, dans une étape ST30, la clé de connexion du premier module communication 200, et après authentification de ce dernier, lui transmet en retour dans une étape ST40 une clé de communication, qui est une séquence binaire pseudo-aléatoire. La clé de communication peut, par exemple, être transmise au premier module de communication 200 sous forme d'une trame binaire de données modulée puis étalée avec la clé de connexion.

Après réception de la clé de communication par le premier module de communication 200, les moyens d'étalement et de désétalement desdits premier module de communication 200 et deuxième module de communication 300 utilisent (étape ST50) alors cette même clé de communication, en tant que séquence binaire pseudo-aléatoire, pour réaliser les étapes d'étalement ST3 et de désétalement ST7 de spectre par séquence directe DSSS, pour chaque signal de données échangé entre ces modules.

Dans le mode de réalisation décrit ci-dessus, préférentiellement, le premier module de communication 200 est un module de communication esclave et le deuxième module de communication 300 un module de communication maître.

Le deuxième module de communication 300, en tant que module maître, est alors réalisé de manière à connaître la clé de connexion de tout module esclave, dont ici celle du premier module de communication 200, connecté pour la première fois à la liaison filaire 400, et à attribuer en retour à tout module esclave une clé de communication disponible et unique. Le deuxième module de communication 300, centralise donc dans une ou plusieurs bases de données les clés de connexion et les clés de communication de chaque module de communication esclave.

Le module maître, ici le deuxième module de communication 300, est par ailleurs capable :
- de désétaler simultanément à l'aide de clés de connexion et/ou de clés de communication distinctes et spécifiques à plusieurs modules esclaves les trames de données transmises par ces modules de communication esclaves ;
- d'attribuer simultanément plusieurs clés de communications distinctes pour des modules de communication esclaves connectés simultanément pour la première fois et à la liaison filaire 400.

Le module de communication maitre a donc pour tâche de gérer l'ensemble des clés de connexion/communication. A l'inverse, chaque module esclave, tel le deuxième module de communication 300, utilise une unique clé de communication/connexion pour désétaler une trame de données réceptionnée.

Avantageusement, une telle configuration permet de garantir qu'une même clé de communication ne pourra pas être attribuée à deux modules de communication esclaves distincts.

Ainsi, il est possible de créer directement des canaux de communication entre un module de communication maitre et tout module de communication esclave, mais aussi entre chaque module de communication esclave. De tels canaux de communication sont alors caractérisés par la clé de communication employée lors des échanges de données entre les différents modules de communication. Un tel mode de réalisation permet donc de garantir la modularité et la flexibilité d'une architecture présentant une pluralité de modules de communication interconnectés sur un réseau électrique par une liaison filaire à l'aide de courants porteurs en ligne CPL. Cette modularité et flexibilité d'architecture, résulte notamment du fait que de la gestion dynamique des clés de connexion/communication est assurée par un unique module de communication maitre.

La liaison filaire CPL peut, selon divers modes de réalisation, être une liaison bifilaire torsadée permettant la transmission de signaux selon un mode différentiel, ou une liaison monofilaire permettant la transmission de signaux selon un mode commun.

Avantageusement, l'ensemble des modes de réalisation décrits ci-dessus permet une transmission simultanée de plusieurs signaux de données 100 émis par des modules de communication distincts sur une même liaison filaire à l'aide de courants porteurs en ligne CPL.

Notamment, l'utilisation d'une technique d'étalement de spectre par séquence directe DSSS permet de réduire le niveau de puissance de chaque signal de données émis, et de rapprocher ce niveau d'un seuil proche du bruit. L'utilisation d'une technique d'étalement de spectre par séquence directe DSSS appliquée à la bande de fréquence des transmissions par courants porteurs en ligne CPL permet ainsi de minimiser le risque de rayonnement du signal de données lors de sa transmission sur la liaison filaire 400, ce signal voyant son niveau d'émission réduit.

Le rapport signal sur bruit se voit, par ailleurs, augmenté après désétalement du signal de données lors de sa réception, permettant ainsi de se prémunir de potentielles erreurs de transmission de données par la liaison filaire 400.

L'étalement de spectre par séquence directe DSSS permet par ailleurs :
- de renforcer la confidentialité des données échangées entre chaque module de communication, un signal réceptionné ne pouvant être désétalé puis identifié que si le module de communication récepteur dispose de la séquence binaire pseudo-aléatoire appropriée ;
- de conférer au signal de données transmis une immunité face aux risques de perturbation bande étroites existant sur la liaison filaire, telles des perturbations radiofréquences rayonnées.

Par ailleurs, l'association d'une technique d'étalement de spectre par séquence directe DSSS avec une modulation fréquentielle multi-porteuse, préférentiellement avec une modulation OFDM, permet de fournir des débits de transmission de données élevés (de l'ordre de plusieurs Mégabits par seconde) et fixes, pour des transmissions multi-modules simultanées.

## Revendications

1. Procédé de communication entre des modules de communication (200, 300) interconnectés sur un réseau électrique par une liaison filaire (400) à l'aide de courants porteurs en ligne , CPL, véhiculés sur la liaison filaire (400), le procédé comprenant :
- avant une émission (ST4) d'un signal de données (100) par un module de communication (200), une étape (ST2) de modulation fréquentielle du signal de données à émettre, et,
- suite à ou durant l'étape (ST2) de modulation fréquentielle du signal de données, une étape (ST3) d'étalement de spectre par séquence directe**,** DSSS, du signal de données (100) à émettre, et,
- après une réception (ST6) d'un signal de données par un module de communication (300), une étape (ST8) de démodulation fréquentielle du signal de données reçu et une étape (ST7) de désétalement de spectre par séquence directe , DSSS, du signal de données reçu.

2. Procédé de communication selon la revendication 1, dans lequel les étapes (ST2, ST8) de modulation et de démodulation sont respectivement réalisées par une modulation et une démodulation par multiplexage fréquentiel orthogonal**,** OFDM,

3. Procédé de communication selon la revendication 1 ou 2, dans lequel l'étape (ST7) de désétalement de spectre par séquence directe, DSSS, du signal de données est réalisée avant ou durant l'étape (ST8) de démodulation du signal de données.

4. Procédé selon l'une quelconque des revendications 1 à 3, comprenant en outre :
- lors d'une première connexion (ST10) d'un premier module (200) de communication à la liaison filaire (400) à laquelle est connecté un deuxième module de communication (300) destiné à communiquer avec ledit premier module de communication (200), une étape (ST20) de transmission d'une clé de connexion par ledit premier module (200) au deuxième module de communication (300) ;
- après réception par le deuxième module de communication (300) de ladite clé de connexion, une étape (ST40) de transmission d'une clé de communication par ledit deuxième module de communication (300) audit premier module de communication (200) ;
- l'utilisation (ST50) de la clé de communication (200) par le premier module de communication et le deuxième module de communication (300) au cours des étapes (ST3, ST7) d'étalement et de désétalement de spectre par séquence directe**,** DSSS, du signal de données.

5. Système de communication comprenant une pluralité de modules de communication (200, 300) interconnectés sur un réseau électrique par une liaison filaire (400) à l'aide de courants porteurs en ligne, CPL, véhiculés sur la liaison filaire (400), chaque module de communication (200, 300) comprenant des moyens de modulation (203) configurés pour moduler fréquentiellement un signal de données (100) à émettre avant son émission, et des moyens de démodulation (303) configurés pour démoduler fréquentiellement un signal de données après sa réception,
**caractérisé en ce que** chaque module de communication (200, 300) comprend, en outre, des moyens d'étalement (210) configurés pour réaliser un étalement de spectre par séquence directe , DSSS, du signal de données à émettre après ou durant la modulation fréquentielle du signal de données par les moyens de modulation (203), et des moyens de désétalement (310) configurés pour réaliser un désétalement de spectre par séquence directe , DSSS, du signal de données reçu.

6. Système de communication selon la revendication 5, dans lequel les moyens de modulation et de démodulation (203, 303) sont respectivement configurés pour réaliser une modulation et une démodulation par multiplexage fréquentiel orthogonal , OFDM,

7. Système de communication selon la revendication 5 ou 6, dans lequel les moyens de désétalement (310) sont configurés pour réaliser le désétalement de spectre par séquence directe**,** DSSS, du signal de données avant ou durant la démodulation du signal de données par les moyens de démodulation (303).

8. Système de communication selon l'une quelconque des revendications 5 à 7, comprenant un premier module de communication (200) et un deuxième module de communication (300) destiné à communiquer avec ledit premier module de communication (200), le premier module de communication (200) étant configuré pour transmettre, lors d'une première connexion à la liaison filaire (400), une clé de connexion audit deuxième module de communication (300), ledit deuxième module de communication (300) ayant reçu ladite clé de connexion étant configuré pour transmettre une clé de communication audit premier module de communication (200), les moyens d'étalement et de désétalement (210, 310) desdits premier module de communication (200) et deuxième module de communication (300) étant configurés, en outre, pour utiliser la clé de communication pour réaliser l'étalement et le désétalement de spectre par séquence directe**,** DSSS, du signal de données.

## Patentansprüche

1. Verfahren zur Kommunikation zwischen Kommunikationsmodulen (200, 300), die in einem Stromnetz über eine Drahtverbindung (400) mit Hilfe von Online-Trägerströmen, PLC, untereinander verbunden sind, welche über die Drahtverbindung (400) übertragen werden, wobei das Verfahren umfasst:
- vor einem Senden (ST4) eines Datensignals (100) durch ein Kommunikationsmodul (200) einen Schritt (ST2) zur Frequenzmodulation des zu sendenden Datensignals, und
- im Anschluss an den oder während des Schritt(es) (ST2) zur Frequenzmodulation des Datensignals einen Schritt (ST3) einer Direktsequenz-Spektrumsspreizung, DSSS, des zu sendenden Datensignals (100), und
- nach einem Empfang (ST6) eines Datensignals durch ein Kommunikationsmodul (300), einen Schritt (ST8) zur Frequenzdemodulation des empfangenen Datensignals und einen Schritt (ST7) einer Direktsequenz-Spektrumsentspreizung, DSSS, des empfangenen Datensignals.

2. Kommunikationsverfahren nach Anspruch 1, bei dem die Schritte (ST2, ST8) der Modulation und Demodulation durch eine Modulation bzw. eine Demodulation durch orthogonales Frequenzmultiplexing, OFDM, vollzogen werden.

3. Kommunikationsverfahren nach Anspruch 1 oder 2, bei dem der Schritt (ST7) der Direktsequenz-Spektrumsentspreizung, DSSS, des Datensignals vor oder während des Schrittes (ST8) zur Demodulation des Datensignals durchgeführt wird.

4. Verfahren nach einem der Ansprüche 1 bis 3, ferner umfassend:
- während einer ersten Verbindung (ST10) eines ersten Kommunikationsmoduls (200) mit der Drahtverbindung (400), mit der ein zweites Kommunikationsmodul (300) verbunden ist, welches dazu bestimmt ist, mit dem ersten Kommunikationsmodul (200) zu kommunizieren, einen Schritt (ST20) zum Übertragen eines Verbindungsschlüssels durch das erste Modul (200) an das zweite Kommunikationsmodul (300),
- nach dem Empfang des Verbindungsschlüssels durch das zweite Kommunikationsmodul (300) einen Schritt (ST40) zur Übertragung eines Kommunikationsschlüssels durch das zweite Kommunikationsmodul (300) an das erste Kommunikationsmodul (200),
- die Verwendung (ST50) des Kommunikationsschlüssels (200) durch das erste Kommunikationsmodul und das zweite Kommunikationsmodul (300) während der Schritte (ST3, ST7) der Direktsequenz-Spektrumsspreizung und -entspreizung, DSSS, des Datensignals.

5. Kommunikationssystem, umfassend eine Vielzahl von Kommunikationsmodulen (200, 300), die in einem Stromnetz über eine Drahtverbindung (400) mit Hilfe von Online-Trägerströmen, PLC, untereinander verbunden sind, welche über die Drahtverbindung (400) übertragen werden, wobei jedes Kommunikationsmodul (200, 300) Modulationsmittel (203), die dazu ausgelegt sind, ein zu sendendes Datensignal (100) vor seinem Senden zu frequenzmodulieren, sowie Demodulationsmittel (303) umfasst, die dazu ausgelegt sind, ein Datensignal nach dessen Empfang zu frequenzdemodulieren,
**dadurch gekennzeichnet, dass** jedes Kommunikationsmodul (200, 300) ferner Spreizmittel (210) umfasst, die dazu ausgelegt sind, eine Direktsequenz-Spektrumsspreizung, DSSS, des zu sendenden Datensignals nach oder während der Frequenzmodulation des Datensignals durch die Modulationsmittel (203) durchzuführen, sowie Entspreizungsmittel (310) umfasst, die dazu ausgelegt sind, eine Direktsequenz-Spektrumsentspreizung, DSSS, des empfangenen Datensignals durchzuführen.

6. Kommunikationssystem nach Anspruch 5, bei dem die Modulations- und Demodulationsmittel (203, 303) jeweils dazu ausgelegt sind, eine Modulation und eine Demodulation durch orthogonales Frequenzmultiplexing, OFDM, durchzuführen.

7. Kommunikationssystem nach Anspruch 5 oder 6, bei dem die Entspreizungsmittel (310) dazu ausgelegt sind, die Direktsequenz-Spektrumsentspreizung, DSSS, des Datensignals vor oder während der Demodulation des Datensignals durch die Demodulationsmittel (303) durchzuführen.

8. Kommunikationssystem nach einem der Ansprüche 5 bis 7, umfassend ein erstes Kommunikationsmodul (200) und ein zweites Kommunikationsmodul (300), das dazu bestimmt ist, mit dem ersten Kommunikationsmodul (200) zu kommunizieren, wobei das erste Kommunikationsmodul (200) dazu ausgelegt ist, während einer ersten Verbindung mit der Drahtverbindung (400) einen Verbindungsschlüssel an das zweite Kommunikationsmodul (300) zu übertragen, wobei das zweite Kommunikationsmodul (300), das den Verbindungsschlüssel empfangen hat, dazu ausgelegt ist, einen Kommunikationsschlüssel an das erste Kommunikationsmodul (200) zu übertragen, wobei die Spreizungs- und Entspreizungsmittel (210, 310) des ersten Kommunikationsmoduls (200) und des zweiten Kommunikationsmoduls (300) ferner dazu ausgelegt sind, den Kommunikationsschlüssel zu verwenden, um das Direktsequenz-Spektrumsspreizen und -entspreizen, DSSS, des Datensignals durchzuführen.

## Claims

1. A communication method for communication between communication modules (200, 300) interconnected over an electricity network by a wired connection (400) using power line communication (PLC) conveyed over the wired connection (400), the method comprising:
- prior to a communication module (200) transmitting (ST4) a data signal (100), a step (ST2) of frequency modulating the data signal for transmission;
- after or during the step (ST2) of modulating the data signal, a step (ST3) of direct-sequence spreading of the spectrum (DSSS) of the data signal (100) for transmission; and
- after a communication module (300) receives (ST6) a data signal, a step (ST8) of frequency demodulation of the received data signal and a step (ST7) of direct-sequence unspreading of the spectrum of the received data signal.

2. A communication method according to claim 1, wherein the modulation and demodulation steps (ST2, ST8) are performed by orthogonal frequency division multiplex (OFDM) modulation and demodulation respectively.

3. A communication method according to claim 1 or claim 2, wherein the step (ST7) of DSSS unspreading of the data signal is performed before or during the step (ST8) of demodulating the data signal.

4. A method according to any one of claims 1 to 3, further comprising:
- on first connection (ST10) of a first communication module (200) to the wired connection (400) to which there is already connected a second communication module (300) that is to communicate with said first communication module (200), a step (ST20) of said first module (200) transmitting a connection key to the second communication module (300);
- after the second communication module (300) has received said connection key, a step (ST40) of said second communication module (300) transmitting a communication key to said first communication module (200); and
- the first communication module (200) and the second communication module (300) making use (ST50) of the communication key during the DSSS spectrum spreading and unspreading steps (ST3, ST7) on the data signal.

5. A communication system comprising a plurality of communication modules (200, 300) interconnected over an electricity network by a wired connection (400) using power line communication (PLC) conveyed over the wired connection (400), each communication module (200, 300) having modulator means (203) configured to perform frequency modulation on a data signal (100) for transmission before it is transmitted, and demodulator means (303) configured to perform frequency demodulation on a data signal after it has been received,
the system being **characterized in that** each communication module (200, 300) further comprises spreader means (210) configured to perform direct-sequence spread spectrum (DSSS) spreading of the data signal for transmission after or during modulation of the data signal by the modulator means (203), and unspreader means (310) configured to perform direct-sequence spread spectrum (DSSS) unspreading of the received data signal.

6. A communication system according to claim 5, wherein the modulator and demodulator means (203, 303) are configured to perform orthogonal frequency division multiplex (OFDM) modulation and demodulation respectively.

7. A communication system according to claim 5 or claim 6, wherein the unspreader means (310) are configured to perform DSSS unspreading of the data signal before or during demodulation of the data signal by the demodulator means (303).

8. A communication system according to any one of claims 5 to 7, comprising a first communication module (200) and a second communication module (300) for communicating with said first communication module (200), the first communication module (200) being configured, on first connection to the wired connection (400), to transmit a connection key to said second communication module (300), said second communication module (300), after receiving said connection key, being configured to transmit a communication key to said first communication module (200), the spreader and unspreader means (210, 310) of said first communication module (200) and of said second communication module (300) also being configured to use the communication key to perform DSSS spreading and unspreading of the data signal.
